# EUROPEAN PATENT SPECIFICATION

(11) **EP 0 379 499 B1**
(45) Date of publication and mention of the grant of the patent: **02.02.1994**
(21) Application number: 88907321.9
(22) Date of filing: 10.08.1988
(51) Int. Cl.: A23J 1/12

(54) **A PROCESS FOR FRACTIONING CROP INTO INDUSTRIAL RAW MATERIAL**
VERFAHREN ZUM FRAKTIONIEREN VON GETREIDE IN INDUSTRIELLE ROHMATERIALIEN
PROCEDE DE FRACTIONNEMENT DE GRAINS DE CEREALES EN VUE DE LEUR TRANSFORMATION EN MATIERE PREMIERE POUR L'INDUSTRIE

(30) Priority: 12.08.1987 FI 873499
(43) Date of publication of application: 01.08.1990
(73) Proprietor: VALTION TEKNILLINEN TUTKIMUSKESKUS, 02150 Espoo 15 (FI)
(72) Inventor: MYLLYMÄKI, Olavi, SF-02210 Espoo (FI); MÄLKKI, Yrjö, SF-02160 Espoo (FI); AUTIO, Karin, SF-02940 Espoo (FI)
(74) Representative: Collier, Jeremy Austin Grey
(86) International application number: FI8800125
(87) International publication number: WO8901294

(56) References cited:
- EP-A- 0 028 518
- WO-A-86/01080
- DE-A- 2 454 236
- US-A- 3 909 288
- US-A- 4 028 468
- US-A- 4 211 695
- US-A- 4 211 801
- US-A- 4 435 429

## Description

Besides the use for conventional foodstuff purposes, the botanical or chemical components of crop raw material have been isolated to be used for industrial purposes. The most extensive industrial implementations are starch separating processes using corn, wheat and barley as a raw material. The main by-products of these processes are gluten, which is recoverable from corn and wheat, other protein fractions, corn oil and wheat germ oil, as well as fractions mainly used as feed. The methods conventionally used for separating starch from crop raw material can be classed into wet milling methods or combinations of dry process steps and wet milling.

In grain fractioning, various mechanical methods are used, such as screening, air classification, sedimentation as well as extracting and dissolving processes. For oat grinding, milling devices generally suitable for the grinding of other crops have been applied. The U.S. patent 4,220,287 discloses a roll milling device equipped with either smooth or fluted rolls.

For oat fractioning, prior known methods in most cases relate to separating an individual component from the oat grains. The protein separation of oats has been an object for the most extensive study, the central method having been dissolving protein into basic solutions and precipitating by means of acids at the isoelectric point.

In several described processes, the alkaline extraction is preceded by a solvent extraction by means of hydrocarbon, halogenated hydrocarbon, aliphatic alcohols, or acetone, in order to remove the avenol, aiming at facilitating the subsequent separating steps and at improving the preservability of end products. The impact of various solvents and temperatures on the extraction yield is known through scientific literature including British patent 1,526,553, among others. In certain methods, such as the one described in the U.S. patent 4,211,801, an organic solvent has been used as a medium to separate bran and endosperm fractions from each other.

The separation of oat gum is described in several processes, as in the method disclosed in U.S. patent 4,028,468, as well as in other scientific literature, being accomplished by extracting into a neutral or alkaline aqueous solution and by precipitating with the aid of aliphatic alcohol or ammonium sulfate. In some processes, like the one disclosed in U.S. patent 4,435,429, the gum material is allowed to be hydrolyzed in order to reduce the viscosity, and is not recovered.

In the PCT application WO-A-8601080, a process is described where beta-glucan is isolated from waxy barley. The isolation is performed by extraction in water at 40 to 60°C, without any preconcentration steps. In this process, starch is not isolated but hydrolyzed to sugars or further fermented to alcohol. Extraction of barley oil is performed after the separation of solid components, and no attention is paid to separation or preserving antioxidative components.

The antioxidative effects of oats are known from research publications. Phenolic compounds, like caffeic and pherulic acid derivatives, are considered major antioxidative factors, however some other oil components, tocopherols, among others, also have a synergetic effect. Nevertheless, this phenomenon has not been technically exploited. In certain processes, such as the one described in British patent 1,526,553 and U.S. patent 4,211,801, hydrogen peroxide is used to clarify the oil, and this procedure is considered to bring about the inactivation of antioxidative factors possibly present. It is likewise known that many other fatty vegetable grains contain polyphenol compounds that have an antioxidative effect. The limited solubility into fats of these compounds has prevented their technical exploitation.

The methods for oat fractioning disclosed in patent literature so far rarely present the final fraction yield, which is one of the most essential criteria when evaluating the profitability of the process. The exact composition of the final fractions is rarely expressed, and most seldom is there given information about the physical or other properties of the end products, which would allow one to deduce properties of the fraction significant for industrial use, such as the viscosity and the molecular weight with regard to the vegetable gum fraction, the purity or residual protein content of the starch fraction and the properties of various lipid fractions in the fat fraction. In the cited methods, the concentration of a component to a certain fraction is usually achieved, but not the degree of concentration or purity prerequisited by the technical use of the fraction. Major known oat fractioning processes are disclosed in the introductory portion of the specification of U.S. patent 4,435,429. As far as is known, none of them has resulted in a permanent technical application.

An object of the present invention is a process for fractionating crop grains, in particular oat grains, so as to obtain a high yield and the purity degree required for technical use, for several of the isolated fractions, and to retain as far as possible the functional properties characteristic of the components of the various fractions. This is achieved according to the invention by using extruding or impact devices and operating methods in the dry milling step of the crop, and by combining a heat treatment, solvent extraction and mechanical treatment, which destroy the major part of the enzymes, in the first milling step.

Among the functional properties of the components, the purity of the starch is to be considered the most important in particular with regard to the residual protein content, the viscosity properties with regard to the vegetable gum fraction, the antioxidative effect and the content of emulsifying components with regard to the fat fraction, and the amino acid composition with regard to the protein fraction. The possible application fields for these fractions can comprise, as to the starch, food, paper, board, plastic and chemical industry uses among others, as to the vegetable gum fraction, use in thickening agents in the food, chemical and pharmaceutical industries, and as soluble dietary fibre in food and pharmaceutical preparations, for the fat fraction, use in edible fats and in the preparation of emulsifiers, and for the protein fraction, use in foodstuffs and feeds.

The process of the present invention for fractionating crop grains, in particular oats, into industrially usable fractions by using dry milling or a combined dry and wet milling and extraction methods is characterized in that:
dry milling is performed by using extruding and/or percussive, but not cutting, grinding methods in one or several steps;
the oil is extracted from the entire batch or from the bran portion using polar solvents like 2-propanol, ethanol or acetone, or mixtures of these and water;
enzymes are for the major part destroyed by combining a heat treatment, solvent extraction and mechanical treatment in the first wet-milling step;
in connection with the extraction step, endosperm is separated under the effect of mechanical forces as a finely divided fraction from the bran remaining in the coarser fraction by screening, sedimentation or hydrocyclonic treatment in the solvent;
beta-glucan is separated by precipitation from the purified solution by precipitation by means of alcohol in a threadlike deposit;
starch is separated from the endosperm by extraction from an alkaline solvent to separate the protein from starch; and
the antioxidative compounds are extracted and their effect is preserved using polar solvents or the presence of polar lipids.

In the first step of the process of the present invention, the outer covering layer of the oat grains, the husks, are removed by means of a known technique, unless hulless oat cultivars are used. The dehulling should be carried out so as to remove a minimum of the portion below the pericarp layer.

The removal of avenol can be optionally carried out in the different steps. However, an efficient extracting effect requires either milling or flaking of the grains. For this reason, the first size-reducing operation subsequent to the dehulling is preferably accomplished by using a roll mill or some other appropriate device, in which particle adhesion to the various parts of the device caused by fat can be prevented by means of the operating method, the sieve dimensioning, and possibly also by use of air jets. A suitable procedure for this purpose is, e.g., grinding through a smooth pair of rolls and subsequent screening with the aid of a sieve, having a 0.2 to 0.5 mm mesh.

The fraction remaining on the sieve can be further reduced by using an impact mill, for instance a hammer mill without sieves. The fraction thus reduced is screened through a 0.1 mm mesh sieve, e.g. by an air jet sieve.

In terms of the present invention, it is important to avoid a cutting operation as far as possible in the size-reducing operations, so that the aleurone layer of the grain and the immediately connected portion containing vegetable gum are retained as large particles. The cohesion of these portions is improved by the fat content and a suitable moisture content in the grinding step, and it can be increased by denaturing protein, e.g. by means of a heating treatment.

According to the final purpose of use of the fractions and to the composition and quality requirements, the extraction of lipids is performed on the entire batch or is concentrated only to the bran portion, where the fat content is higher than in the endosperm fraction. Preferable solvents according to the invention are polar solvents such as 2-propanol, ethanol or acetone, or mixtures of these and water, in order to increase the amount of extracted polar lipids and the total yield of lipids. The preferable temperature range is 50 to 90°C. In order to minimize the oxidation and hydrolyzation reactions of the lipids, it is important to inactivate a major part of the lipase and lipoxydase activity of the oat grains by means of a heating or other denaturing treatment carried out as early as possible. The same treatment inactivates the beta-glucanase activity and denatures the proteins of the grain. The treatment can be effected, e.g., by steaming at the flaking stage of the grains by means of prior known technique, or by extracting by a hot solvent, whereby the denaturing and inactivating effect on the enzymes of the solvents and/or solvent-water systems and/or acidity also can be exploited. However, the heating treatments have to be dimensioned so as to avoid a simultaneous gelatinization of the starch. The polarity and/or density of the organic solvent is adjustable by adding water or other organic solvents.

The extraction step can be combined with the separation of the endosperm and bran fractions. Provided that the size-reducing operations preceding the extraction have been effected as indicated above, the endosperm fraction is separated in the extraction and under the effect of mechanical forces then exerted as a finely divided fraction and the bran remains in the coarser fraction. These can be separated from each other by screening in a solvent suspension by using a 0.08 - 0.125 mm mesh sieve or by means of sedimentation or hydrocyclonic treatments.

The most valuable component of the endosperm fraction is the starch. It can be separated from the other components of the endosperm fraction by means of techniques known in starch industry, such as sedimentation or hydrocyclonic treatments or air classification. Besides in the aqueous phase, the sedimentation and hydrocyclonic treatments can also be carried out in an organic solvent. When aiming at low residual protein contents or desiring to reduce the number of operation steps, extraction from an alkaline solvent is preferably used to separate the protein from the starch.

When using dry separation operations, the bran fraction remaining on the sieve is approximately 27 to 35% of the amount of dehulled oats. By choosing favourable conditions, the proportion of the bran fraction can be reduced to about 20% of the mass of the dehulled oats by using the separation in a solvent suspension described above. The bran fraction thus concentrated is capable of being used as such in order to increase the dietary fibre content of foodstuffs and clinical alimentary preparations, but the beta-glucan can be further separated for use as a soluble dietary fibre or for the preparation of thickening or binding agents.

The beta-glucan is extracted from the bran fraction in a water or alkaline solution, at a temperature of 50 to 75°C, preferably at a temperature of about 70°C. In order to make it technically possible to separate the viscous extracting solution from the solid matter, the amount of extracting solution must be 200-fold, preferably 300-fold to the amount of beta-glucan in the bran. When using alkaline extraction, the protein of the bran is dissolved at the same time. It is precipitated at the isoelectric point and is separated, e.g., by centrifugation. The pH of the clear solution is now raised to 7 pH, and the beta-glucan is precipitated by means of alcohol, e.g. ethanol or 2-propanol or ammonium sulfate. When precipitating by means of alcohol, the beta-glucan is precipitated as a threadlike deposit, which is easy to separate by screening. The concentrate obtained can be further purified by elutriating into a small amount of alcohol. The beta-glucan can be retained suspended in the alcohol without deteriorating the viscosity properties, or it can be dried by air drying or at under-pressure.

When using polar solvents for extracting the fat, it is known that a greater amount of polar lipids is transferred into the extract than by using non-polar solvents. It has been observed in this study that the extraction of compounds having an antioxidative effect is strongly dependent on the polarity of the solvent. It has also been observed that they remain dissolved in avenol, unless it is further refined to remove the polar lipids, and that such a avenol has an antioxidative effect also when added to other oils.

The invention is further described below by means of examples.

### Example 1

Dehulled oats were ground through a smooth pair of rolls and screened through a 0.2 - 0.3 mm mesh cylindrical sieve. The weight proportion of the separated fine endosperm fraction was 60-65%, its starch content was 80-81%, protein content 10-11%, fat content 5.8% and beta-glucan content about 1%. Correspondingly, the starch, protein, fat and beta-glucan contents of the bran faction were respectively 40-43; 18-20; 7.8 and 11-12%. The dietary fibre content of the bran fraction was 29%.

### Example 2

The dehulled oats were ground through a smooth pair of rolls, and treated by means of a hammer mill without a screen. The mixture was suspended into a sixfold weight quantity of water-2-propanol mixture (15:85% v/v), and it was extracted in this suspension for 2 hours under agitation. By screening through a 0.125 mm mesh sieve, a fine endosperm fraction was separated from the suspension, the dry weight of which was 71% of the weight of the dehulled oats. Its starch, protein, fat and beta-glucan contents were respectively 85; 10.5; 1.5 and 1%. Correspondingly, the weight proportion of the bran fraction remaining on the sieve was 24% of the amount of dehulled oats, and its starch, protein, fat and beta-glucan contents were 35; 23; 2 and 15.5%, its ash content 3.5% and dietary fibre content 35%.

### Example 3

The bran fraction of Example 1 was concentrated by elutriating into a sixfold weight amount of water-alcohol mixture at 75-78°C which contained 80 volume-% of 2-propanol and 20 volume-% of water. The mixture was vigorously homogenized by a blade mixer during approximately 3 minutes, and was subsequently mixed by a paddle mixer during 1 to 2 hours. The solid matter was screened by a 0.125 mm mesh sieve, whereby the concentrated bran fraction remained on the sieve, the dry weight of which was approximately 20% of the weight of the dehulled oats batch. Its beta-glucan content was 17 to 18%, the total dietary fibre content 35 to 39%, and protein content 20 to 24%. The starch content of the solid matter having passed through the screen was 83 to 86%. When effecting a batch process, about 75% of the oil content of the bran was transferred into the extraction solution by one extraction.

### Example 4

The bran concentrate prepared according to Example 3 was extracted by a sodium hydroxide solution adjusted to a 9.5 pH value at a temperature of 70°C during 2 hours. In order to facilitate the further processing of the viscous solution subsequent to the extraction, the amount of extracting solution was about 40-fold to the amount of solid matter, i.e. 200 to 300-fold to the amount of beta-glucan. The extracted protein was precipitated by adjusting the pH value of the solution to pH 4.5, and the protein was separated by centrifugation. The pH of the solution was now adjusted to 7.0 and the beta-glucan was precipitated by directing the viscous beta-glucan solution into ethanol or 2-propanol, under simultaneous vigorous agitation, until the alcohol concentration of the mixture was reduced to 50% by weight. The beta-glucan was precipitated as a thread-like mass which was easily separated from the solution onto a 0.2 mm mesh sieve or by means of a filter press. After washing with 2-propanol, the deposit was dried by evaporating the solvent at a temperature of 35°C. The beta-glucan content of the preparation was 80%, the residual protein content was 2 to 4% and the starch content was 2 to 3%.

### Example 5

The starch was separated from the endosperm fraction of Example 2 by extracting the endosperm fraction by a sodium hydroxide solution, the pH of which was 9.5, at a temperature of 40°C. The solid matter was separated from the solution by means of a hydrocyclone. The residual protein content of the starch obtained after repeated washing steps was 0.4% and the residual fat content was 0.5%.

### Example 6

The solvent was removed by evaporation from the 2-propanol extract of Example 2. The oil obtained was added to refined corn oil in a concentration of 3%, and the stability of the oil to oxidation was tested by the Rancimat procedure and device by leading oxygen through the oil at 110°C, by absorbing the oxidation products from the exhaust gas into an absorption solution and by recording the change in the electroconductivity of the latter. The increase of the oxidation induction time caused by the avenol addition was the same as when 0.2% butylated hydroxyanisol was added. The antioxidative properties were observed also in the lecithin fraction of the oil.

### Example 7

1000 kg of dehulled and steam-treated oat kernels were ground with a pilot-scale roll milling equipment. From the rolls, the meal was conducted to a 670 µm vibrating screen, and the remaining bran was further purified by a bran centrifugator. The proportion of flaked bran was 41% by weight and its beta-glucan content 9.0%. The proportion of flour was 50% by weight and its beta-glucan content 1.6%. By further screening of the bran with the aid of an air jet sieve the beta-glucan content of the bran remaining on a 75µm sieve was increased to 11.7%.

The grinding of solvent-extracted flakes made from the same dehulled raw material was technically difficult to carry out with the equipment. Owing to the extraction of the lipids, the flakes broke and the share of bran after the screening was about 19% by weight and its beta-glucan content 11%. The beta-glucan content of the endosperm fraction having penetrated was 2.6%. The beta-glucan content of the bran could not be further concentrated by means of the air jet sieve.

The above examples are based on experiments carried out with oat grains. Besides oats, the process is suitable, where applicable, also for fractioning the grains of other crops.

## Claims

1. A process for fractionating crop grains, in particular oats, into industrially usable fractions by using dry milling or a combined dry and wet milling and extraction methods characterized in that:
dry milling is performed by using extruding and/or percussive, but not cutting, grinding methods in one or several steps;
the oil is extracted from the entire batch or from the bran portion using polar solvents like 2-propanol, ethanol or acetone, or mixtures of these and water;
enzymes are for the major part destroyed by combining a heat treatment, solvent extraction and mechanical treatment in the first wet milling step;
in connection with the extraction step, endosperm is separated under the effect of mechanical forces as a finely divided fraction from the bran remaining in the coarser fraction by screening, sedimentation or hydrocyclonic treatment in the solvent;
beta-glucan is separated by precipitation from the purified solution by precipitation by means of alcohol in a threadlike deposit;
starch is separated from the endosperm by extraction from an alkaline solvent to separate the protein from starch; and
the antioxidative compounds are extracted and their effect is preserved using polar solvents or the presence of polar lipids.

2. A process according to claim 1, in which the lipid extraction is performed in conditions which inactivate enzymes and denature protein components, by combining the effects of heat and an aqueous polar solvent mixture at temperatures between 50 to 90°C.

3. A process according to claims 1 or 2, in which the polarity and/or density of the organic solvent is adjusted by adding water or organic solvent.

4. A process according to claim 1, in which the precipitated beta-glucan is kept suspended in an organic solvent before drying.

## Patentansprüche

1. Verfahren zum Fraktionieren von Getreidekörnern, insbesondere Hafer, in industriell verwendbare Fraktionen durch Anwenden einer Trockenmahlung oder durch kombinierte Trocken- und Naß-Mahlung sowie durch Extraktionsverfahren, dadurch gekennzeichnet,
daß das Trockenmahlen durchgeführt wird durch Anwenden von Extrusions- und/oder Schlagverfahren, nicht jedoch durch Schneid- oder Schleifverfahren, in einem oder mehreren Verfahrensschritten;
daß das Öl von der gesamten Charge oder von dem Kleienanteil extrahiert wird durch Anwenden polarer Lösungsmittel wie 2-Propanol, Äthanol oder Aceton, oder Gemischen aus diesen und Wasser;
daß Enzyme zum großen Teil zerstört werden durch Kombinieren einer Wärmebehandlung, einer Lösungsmittelextraktion und einer mechanischen Behandlung bei der ersten Naßmahlstufe;
daß in Verbindung mit der Extraktionsstufe Endosperm unter der Einwirkung mechanischer Kräfte als feinverteilte Fraktion abgetrennt wird von der Kleie, die in der groberen Fraktion verbleibt durch eine Siebbehandlung, eine Sedimentationsbehandlung oder eine Hydrozyklonbehandlung im Lösungsmittel;
daß Beta-Glucan durch Ausfällen aus der gereinigten Lösung abgetrennt wird mittels Ausfällens durch Alkohol in einer fadenartigen Ablagerung;
daß die Stärke abgetrennt wird aus dem Endosperm durch Extraktion aus einem alkalischen Lösungsmittel, um das Protein von der Stärke abzutrennen, und
daß Antioxydationsverbindungen extrahiert werden und ihre Wirkung durch Anwendung polarer Lösungsmittel oder durch die Anwesenheit polarer Lipoide erhalten bleibt.

2. Verfahren nach Anspruch 1, wobei die Lipoidextraktion unter Bedingungen durchgeführt wird, unter welchen die Enzyme de-aktiviert und die Proteinbestandteile denaturiert werden, durch Kombinieren der Wirkungen von Wärme sowie eines wässrigen polaren Lösungsmittelgemisches bei Temperaturen zwischen 50 und 90° C.

3. Verfahren nach Anspruch 1 oder 2, wobei die Polarität und/oder die Dichte des organischen Lösungsmittels durch Zugabe von Wasser oder eines organischen Lösungsmittels eingestellt wird.

4. Verfahren nach Anspruch 1, wobei das ausgefällte Beta-Glucan in einem organischen Lösungsmittel vor dem Trocknen in Suspension gehalten wird.

## Revendications

1. Un procédé pour le fractionnement de grains de céréales, en particulier d'avoine, en des fractions utilisables industriellement en utilisant un broyage sec ou un broyage combiné sec et liquide et des méthodes d'extraction caractérisé en ce que:
le broyage sec est réalisé en utilisant des méthodes de meulage par extrusion et/ou percussion, mais pas par coupage, en une ou plusieurs étapes;
l'huile est extaite du lot entier ou de la portion de son en utilisant des solvants polaires comme le propanol-2, l'éthanol ou l'acétone, ou des mélanges de ceux-ci et d'eau;
les enzymes sont détruites pour la majeure partie en combinant un traitement à la chaleur, une extraction par solvant et un traitement mécanique dans la première étape de broyage liquide;
en connexion avec l'étape d'extraction, l'endosperme est séparé sous l'effet de forces mécaniques comme une fraction finement divisée du son restant dans la fraction brute par criblage, sédimentation ou traitement hydrocyclonique dans le solvant;
le bêta-glucan est séparé par précipitation de la solution purifiée par précipitation au moyen d' alcool dans un dépôt filiforme;
l'amidon est séparé de l'endosperme par extraction d'un solvant alcalin pour séparer la protéine de l'amidon; et
les composés antioxydants sont extraits et leur effet est préservé en utilisant des solvants polaires ou la présence de lipides polaires.

2. Un procédé selon la revendication 1, dans lequel l'extraction de lipide est réalisée dans des conditions qui inactivent les enzymes et dénaturent les composants protéine, en combinant les effets de la chaleur et un mélange de solvant polaire aqueux à des températures entre 50 à 90°C.

3. Un procédé selon la revendication 1 ou 2, dans lequel la polarité et/ou la densité du solvant organique est ajustée en ajoutant de l'eau ou un solvant organique.

4. Un procédé selon la revendication 1, dans lequel le bêta-glucan précipité est gardé en suspension dans un solvant organique avant séchage.
